# EUROPEAN PATENT APPLICATION

(11) **EP 4 716 375 A1**
(43) Date of publication of application: **25.03.2026**
(21) Application number: 24806653.2
(22) Date of filing: 17.05.2024
(51) Int. Cl.: H05B 47/155

(54) **ILLUMINATION CONTROL PANEL AND DISPLAY CONFIGURATION METHOD THEREFOR**

(30) Priority: 17.05.2023 CN 202310560459
(71) Applicant: Suzhou Opple Lighting Co., Ltd., Suzhou, Jiangsu 215211 (CN); Opple Lighting Co., Ltd., Shanghai 201201 (CN)
(72) Inventor: XU, Xingxing, Suzhou, Jiangsu 215211 (CN); FENG, Yunlong, Suzhou, Jiangsu 215211 (CN); LIU, Yalong, Suzhou, Jiangsu 215211 (CN)
(74) Representative: Winter, Brandl - Partnerschaft mbB
(86) International application number: PCT/CN2024/093852
(87) International publication number: WO 2024/235304

(57) **Abstract**

The present disclosure provides an illumination control panel and a display configuration method therefor. The illumination control panel comprises keys, a display screen, a control module and a driving module. A key is bound to an illumination scene, and a corresponding display region is provided on the display screen. The control module controls the display effect of the corresponding display region according to optical parameters of the illumination scene bound to the key. The driving module supplies power to the control module and the display screen. The illumination scene corresponding to a key in the illumination control panel provided by the present disclosure may be configured by a user on his or her own, each key is provided with a corresponding display region in the display screen, and, according to the light color and brightness of the scene, different effects are displayed in the region. Compared with conventional text identifiers, the optical characteristics of the scene may be more visually reflected, thereby improving the user experience.

## Description

### TECHNICAL FIELD CROSS-REFERENCE TO RELATED APPLICATION

The present disclosure claims priority of the Chinese Patent Application No. 202310560459.6, filed on May 17, 2023, and titled with "LIGHTING CONTROL PANEL AND DISPLAY SETTING METHOD THEREOF", the disclosure of which is incorporated herein by reference in its entirety as part of the present disclosure.

### TECHNICAL FIELD

The present disclosure relates to a lighting control panel and a display setting method thereof.

### BACKGROUND

In the current intelligent lighting field, the status of the panel in the entire lighting system is becoming increasingly important. From switches to control centers with screens, they are all variants of the panel. Among panel products, scene panels are a relatively special type. There are usually two types of scene panels: one is a scene panel with engraved characters, where keys are bound to some fixed scenes preset at the device level; the other is a scene panel without engraved characters, which is easy to achieve a sense of design in appearance, and users usually bind the scenes required for each key by themselves. Both methods have their advantages and disadvantages. After engraving characters, the appearance of the whole panel is significantly affected, and the scenes need to correspond to the characters after engraving, resulting in insufficient flexibility in use. Although the panel without engraved characters is flexible in use, users often need to remember the specific scene content bound to each key, which is not friendly in experience.

### SUMMARY

The purpose of the present disclosure is to solve the above problems and provide a lighting control panel and a display setting method thereof that can intuitively reflect the key and its corresponding scene.

To achieve the above purpose, the technical solution adopted by the present disclosure is to provide a lighting control panel, which includes a key, a display screen, a control module, and a drive module, the key is bound to a lighting scene and is provided with a corresponding display area on the display screen, the control module controls a display effect of the corresponding display area according to an optical parameter of the lighting scene bound to the key, and the drive module supplies power to the control module and the display screen.

Preferably, the optical parameter of the lighting scene includes at least one selected from the group consisting of a light color, a color temperature, and brightness of the lighting scenes.

Preferably, the display effect is a background color and/or background brightness of the corresponding display area, and the background color and/or the background brightness correspond to the optical parameter.

Preferably, the optical parameter of the lighting scene is a measured value in the lighting scene.

Preferably, the key is a touch key or a mechanical key.

The present disclosure also provides a display setting method of a lighting control panel, applied to the above lighting control panel, which includes the following steps:
Step S1, the control module acquires the lighting scene bound to the key and reads the optical parameter in a scene card of the lighting scene;
Step S2, the control module determines the display effect of the corresponding display area according to the optical parameter;
Step S3, the control module controls the display screen to realize the display effect in the corresponding display area.

Preferably, the optical parameter of the lighting scene includes at least one selected from the group consisting of a light color, a color temperature, and brightness of the lighting scene.

Preferably, the display effect is the background color and/or background brightness of the corresponding display area, and the background color and/or background brightness correspond to the optical parameter.

Preferably, before the step S1, the display setting method further includes: step S0: when the key is bound to the lighting scene or the lighting scene corresponding to the key changes, the control module acquires a lighting fixture parameter in the lighting scene, calculates the optical parameter of the lighting scene, and records the optical parameter into the scene card.

Preferably, the lighting fixture parameter in the lighting scene is a measured value when the scene is activated.

The lighting scenes corresponding to keys in the lighting control panel provided by the present disclosure can be set by users themselves. Each key is provided with a corresponding display area on the display screen, and the corresponding display area displays different effects according to the light color and brightness of the lighting scene. Compared with traditional text labels, it can more intuitively reflect the optical characteristics of the scene, thereby improving user experience.

### BRIEF DESCRIPTION OF DRAWINGS

Fig. 1 is a schematic structural diagram of a lighting control panel according to a preferred embodiment of the present disclosure;
Fig. 2 is a flowchart of a display setting method of a lighting control panel according to a preferred embodiment of the present disclosure;
Fig. 3 is a flowchart when saving a lighting scene according to a preferred embodiment of the present disclosure;
Fig. 4 is a display processing flowchart of a lighting control panel according to a preferred embodiment of the present disclosure;
Fig. 5 is a processing flowchart when a lighting scene changes according to a preferred embodiment of the present disclosure.

### DETAILED DESCRIPTION

Hereinafter, the lighting control panel and the display setting method thereof proposed by the present disclosure will be further described in detail below with reference to the accompanying drawings and specific embodiments.

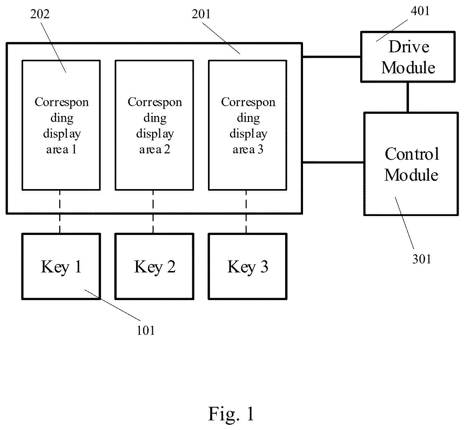

Fig. 1 is a schematic structural diagram of a lighting control panel according to a preferred embodiment of the present disclosure. The panel is divided into an upper part and a lower part, the lower part is provided with keys 101, and the upper part is a display screen 201. The display screen 201 is provided with corresponding display areas 202 directly above the keys 101. There may be a plurality of keys 101. In this embodiment, three mechanical switches, namely key 1, key 2, and key 3, are set side by side. Corresponding display area 1, corresponding display area 2, and corresponding display area 3 are provided at positions directly above the keys 101 on the display screen 201 above the keys 101. When the key 101 is bound to a lighting scene, the corresponding display area 202 displays relevant content, and the specific content displayed in the corresponding display area 202 is controlled by a control module 301. The control module 301 may be integrally arranged in the panel. The controller may also include a communication module arranged in the panel and a core control processor arranged at a remote end, which is not limited in the present disclosure. A drive module 401 supplies power to the control module 301 and the display screen 201.

In other preferred embodiments, the key 101 may also be a touch key, and the touch area directly overlaps with the corresponding display area 202, so that operation can be directly performed on the display screen 201.

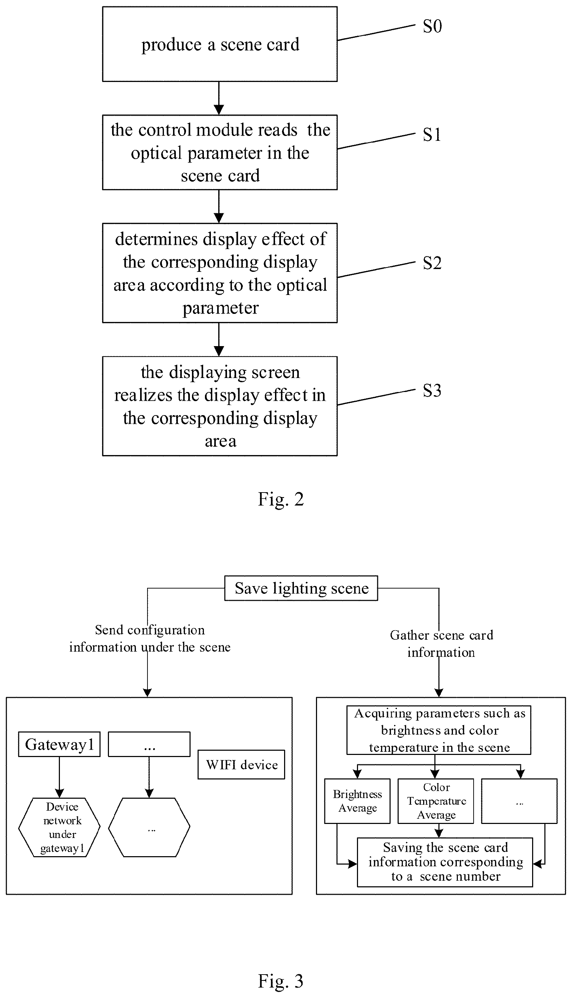

After an existing control panel is bound to a lighting scene, it generally displays the name of the lighting scene at the corresponding position of the display screen, such as "Dining Mode", "Working Mode", "Movie Viewing Mode", etc. It is difficult for users to understand the actual effect of various modes, especially some infrequently used scenes. After a period of time, users will forget the specific setting effect of the scene, which brings difficulties to users in selection. In this embodiment, in addition to displaying the scene identifier of the corresponding key 101, the corresponding display area 202 also reflects the optical parameter of the lighting scene bound to the key 101. The control module 301 determines the display effect of the corresponding display area 202 according to the control of the optical parameter of the lighting scene. The specific method is shown in Fig. 2, including the following steps:
step S1, the control module 301 acquires the lighting scene bound to the key 101 and reads the optical parameter in a scene card of the lighting scene;
step S2, the control module 301 determines the display effect of the corresponding display area 202 according to the optical parameter that is acquired;
step S3, the control module 301 controls the display screen 201 to realize the corresponding display effect in the corresponding display area 202.

The scene card of the lighting scene is mentioned in step S1, and the scene card records various parameters of the lighting scene, such as the type and quantity of devices included in the lighting scene, the working status of each device in the lighting scene, etc. In this embodiment, the scene card also records the optical parameter such as a color temperature and brightness of the lighting system under the scene. In other preferred embodiments, it may also include colored lighting effects, and the scene card may also record a light color as an optical parameter. These optical parameter may be preset by users. For example, when creating a lighting scene, the color temperature and brightness required for the lighting scene are directly set and recorded in the scene card. Of course, in more cases, when creating a scene, users will control each light fixture in the lighting scene separately, observe their effects, and save them as a lighting scene after all lighting fixtures are adjusted. In this case, it is needed to collect the parameters of each the light fixture in the lighting scene and generate a clear brightness parameter and color temperature parameter as the optical parameter of the lighting scene according to a certain algorithm and record it in the scene card. Therefore, a step S0 is further included before step S1 in Fig. 2: when the key 101 is bound to a lighting scene or the lighting scene corresponding to the key 101 changes, the control module 301 acquires a lighting fixture parameter in the lighting scene, calculates the optical parameter of the lighting scene according to the lighting fixture parameter, and records it into the scene card. The lighting fixture parameter may be records of various parameters marked by the light fixture at the factory, obtained by the control module 301 through querying a cloud product list, or may be reported by each lighting fixture itself for the current state. In this embodiment, the optical parameter is a measured value in the lighting scene. An average value is calculated by detecting a brightness value and a color temperature value of each lighting fixture in the lighting scene, so as to obtain the brightness parameter and color temperature parameter under the lighting scene. Detecting the brightness value and color temperature of each lighting fixture in the lighting scene may be reported by the lighting fixture itself for the current brightness value and color temperature value, or may be measured by a sensor module connected to the system.

For the specific saving method of the lighting scene, refer to Fig. 3. When saving the lighting scene, on the one hand, configuration information is sent to the device network, and the configuration information is transmitted to each device in the lighting scene through the network (left path). At the same time, the background synchronously gathers the information of the lighting parameter such as brightness and color temperature of the current scene, processes it through an algorithm to acquire the brightness parameter and color temperature parameter suitable for the current scene, and saves them into the scene card information corresponding to a current scene number (right path).

In step S2, the control module 301 determines the display effect of the corresponding display area 202 according to the optical parameter that is acquired. The display effect here may be directly displaying these optical parameters in text form, but this is usually not aesthetically pleasing. In this embodiment, the display effect may be rendering of the background of the corresponding display area 202 of the key 101, which may render the color or brightness of the background, or both at the same time.

Effect of the rendering is related to the optical parameter of the lighting scene, and different rules can be adopted for different optical parameters. For example, in some colored light systems, the scene card stores light color as an optical parameter, and the corresponding display area 202 can directly display the light color in the scene. The brightness information can also be directly matched, where the higher the brightness value is in the lighting scene, the higher the brightness of the base color is adopted by the corresponding display area 202. In a white light system, the color temperature is difficult to display on the screen. In this case, the following rules can be adopted: taking white light with a color temperature of 6000K as a dividing line, the closer the color temperature is to 6000K, the more the base color tends to be white; the higher the color temperature than 6000K, the more the card base color tends to be blue, and when the color temperature reaches 10000K or higher, the base color tends to be purple; the lower the color temperature than 5000K, the more it tends to be warm overall, the more the card base color tends to be red, and the transition colors may include yellow, orange, orange-red, etc. Two optical parameters can also be combined for display. For example, when the color temperature is 5700K and the brightness is 100%, the base color of the corresponding display area 202 is cool and high-brightness white light; when the color temperature is 3000K and the brightness is 30%, the base color of the corresponding display area 202 is warm, yellowish and low-brightness base color, and so on. Displaying information such as brightness and color temperature to users in a screen display manner by combining them can facilitate users to quickly know the general situation of the lighting scene bound to each key and assist users in selecting the lighting scene.

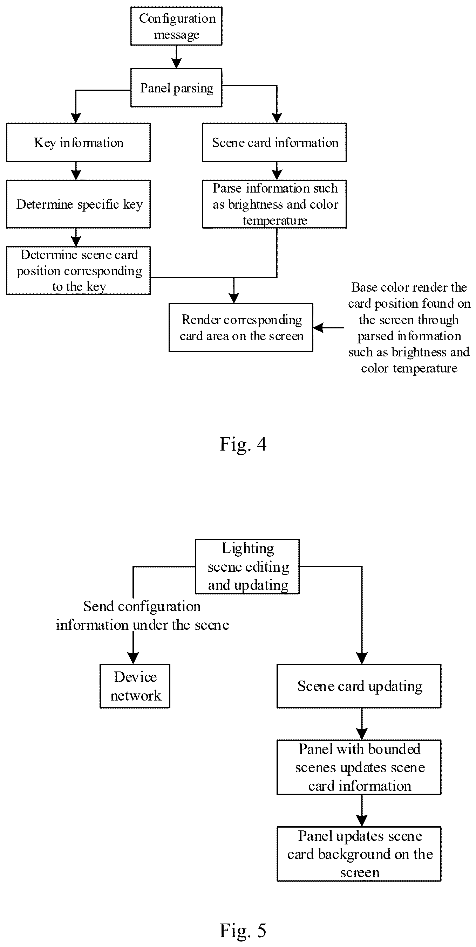

The display processing flow of the panel may refer to Fig. 4. After receiving the card information of the lighting scene bound to the key 101, the panel parses the configuration message, finds the corresponding display area 202 on the display screen 201 corresponding to the key 101 through the parsed key 101 information, and then dynamically renders the hue and brightness of the corresponding display area 202 in the corresponding screen according to the optical parameters such as brightness value and color temperature value in the parsed scene card information in accordance with the aforementioned rules. In another more preferred solution, several base images with different effects are preset according to different color temperature segments. When the color temperature is in a certain segment, the base image corresponding to the color temperature segment is directly applied. This method can reduce the number of renderings. When the user fine-tunes the parameters of the lighting scene, as long as the color temperature parameter is still in the original color temperature interval, there is no need to adjust and render the base image.

When the scene changes, the specific processing flow is shown in Fig. 5. After the control module 301 detects that the scene content is modified, it will synchronously update the scene card. When the content of the scene card changes, it is needed to reissue the parameters of the scene card to the screen-equipped panel products that have been bound to this scene before. In this case, the control module 301 re-determines the display effect according to the new optical parameter and controls the rendering of the corresponding display area 202 of the display screen 201.

The above description of the preferred embodiments of the present disclosure is for illustration and description purposes, and is not intended to exhaust or limit the present disclosure to the disclosed specific forms. Obviously, many modifications and changes can be made, which will be obvious to those skilled in the art and should be included within the scope of the present disclosure as defined by the appended claims.

## Claims

1. A lighting control panel, comprising a key, a display screen, a control module, and a drive module, wherein the key is bound to a lighting scene and is provided with a corresponding display area on the display screen, the control module controls a display effect of the corresponding display area according to an optical parameter of the lighting scene bound to the key, and the drive module supplies power to the control module and the display screen.

2. The lighting control panel according to claim 1, wherein the optical parameter of the lighting scene comprises at least one selected from the group consisting of a light color, a color temperature, and brightness of the lighting scene.

3. The lighting control panel according to claim 2, wherein the display effect is a background color and/or background brightness of the corresponding display area, and the background color and/or the background brightness correspond to the optical parameter.

4. The lighting control panel according to claim 2, wherein the optical parameter of the lighting scene is a measured value in the lighting scene.

5. The lighting control panel according to any one of claims 1-4, wherein the key is a touch key or a mechanical key.

6. A display setting method of a lighting control panel, applied to the lighting control panel according to any one of claims 1-5, comprising the following steps:
step S1, the control module acquires the lighting scene bound to the key and reads the optical parameter in a scene card of the lighting scene;
step S2, the control module determines the display effect of the corresponding display area according to the optical parameter;
step S3, the control module controls the display screen to realize the display effect in the corresponding display area.

7. The display setting method of a lighting control panel according to claim 6, wherein the optical parameter of the lighting scene comprises at least one selected from the group consisting of a light color, a color temperature, and brightness of the lighting scene.

8. The display setting method of a lighting control panel according to claim 7, wherein the display effect is a background color and/or background brightness of the corresponding display area, and the background color and/or background brightness correspond to the optical parameter.

9. The display setting method of a lighting control panel according to claim 7, wherein, before the step S1, the display setting method further comprises step S0: when the key is bound to the lighting scene or the lighting scene corresponding to the key changes, the control module acquires a lighting fixture parameter in the lighting scene, calculates the optical parameter of the lighting scene, and records the optical parameter into the scene card.

10. The display setting method of a lighting control panel according to claim 9, wherein the lighting fixture parameter in the lighting scene is a measured value when the lighting scene is activated.
